# EUROPEAN PATENT APPLICATION

(11) **EP 4 570 632 A1**
(43) Date of publication of application: **18.06.2025**
(21) Application number: 23216275.0
(22) Date of filing: 13.12.2023
(51) Int. Cl.: B62D 35/00, B62D 37/02

(54) **AIRFLOW GUIDING SYSTEM FOR A VEHICLE AND VEHICLE COMPRISING AN AIRFLOW GUIDING SYSTEM**

(71) Applicant: Wuhan Lotus Cars Co., Ltd., Wuhan, Hubei (CN)
(72) Inventor: Ribaldone, Enrico, 65933 Frankfurt am Main (DE); Fares, Ehab, 64673 Zwingenberg (DE)
(74) Representative: Elzaburu S.L.P.

(57) **Abstract**

The invention relates to a vehicle (10) and to an airflow guiding system (12) for a vehicle (10), the airflow guiding system (12) comprising: at least one air inlet (14) and at least two air outlets (22, 24), wherein the air inlet (14) and the air outlets (22, 24) each face the surroundings of the vehicle (10); an air channel arrangement (16) that fluidically connects the at least one air inlet (14) and the air outlets (22, 24); and an airflow adjustment device (30) that is configured to variably adjust an air flow passing through each of the air outlets (22, 24).

## Description

The invention concerns an airflow guiding system for a vehicle and a vehicle comprising an airflow guiding system. The vehicle may in particular be a road vehicle and/or a motor vehicle. For example, the vehicle may be a car, a truck or a bus.

### Background

It is known to provide internal air channels within a vehicle which guide air entering from the surroundings towards air outlets in order to generate air flows directed into the surroundings in defined directions. For example, EP 3 206 939 B1; discloses a system in which a substantially vertically oriented air flow is generated. This results in a downforce on a rear portion of the vehicle which improves traction.

In other driving situations, however, such a vertically oriented airflow is not necessary and might even be undesired due to increasing aerodynamic drag. For example, to reduce aerodynamic drag, it is generally known to use active or passive external control surfaces, such as spoilers, wings or deflectors. This may help to generate more horizontal and/or laminar airflows at or around the vehicle.

### Summary of the invention

The present invention is directed to the object of improving controllability of the aerodynamic properties of a vehicle, in particular in order to better control its driving characteristics and/or its aerodynamic drag.

This problem is solved by the subject matters according to the independent claims. Further embodiments of the invention are set out in the dependent claims, in this description and in the figures.

Accordingly, an airflow guiding system for a vehicle is disclosed, the airflow guiding system comprising: at least one air inlet and at least two air outlets, wherein the air inlet and the air outlets each face (and in particular each open into) the surroundings of the vehicle, an air channel arrangement that fluidically connects the at least one air inlet and the air outlets, and an airflow adjustment device that is configured to variably adjust an air flow that passes through each of the air outlets.

The air channel arrangement may define at least one internal flow path for air within the vehicle. The air channel arrangement may comprise at least one channel member or, in other words, duct member. The air inlet and/or the air outlets may form apertures in said channel member. The channel member may provide a fluidic connection, in particular a direct fluidic connection, between the air inlet and the air outlets. For example, the channel member may be a, in particular branched, pipe-like structure through which the air can flow.

In one example, the air channel arrangement provides a fluidic connection between the air inlet to all air outlets or between all air inlets of an optional plurality of air inlets to all air outlets.

In other examples, a plurality of channel members may be comprised by the air channel arrangement, with each channel member connecting one of a plurality of air inlets to at least one of the air outlets. This way, individual or separate air ducts between each air inlet and at least one air outlet can be defined by each channel member. Each air outlet may thus the individually fluidically connected to and/or individually assigned to a respective air inlet.

The air channel arrangement may have at least one chamber or, put differently, at least one plenum into which air entering from the air inlet is guided. For example, at least one, in particular elongated, channel section may connect the chamber to the air inlet. This channel section may substantially extend along a longitudinal axis of the vehicle, whereas the chamber may extend substantially along a width axis of the vehicle. The air outlets may be fluidically connected to said chamber. In particular, the air outlets may form apertures in said chamber and in particular in walls or other structures confining said chamber.

Generally, a longitudinal axis of the vehicle may extend substantially orthogonally to and intersect each of the axes of the vehicle. A width axis may extend along or in parallel to at least one axis of the vehicle. A height axis may correspond to a vertical spatial axis. The longitudinal axis and width axis may extend in a horizontal spatial plane.

The air outlets and at least one air inlet may form apertures in outer surfaces of the vehicle. Additionally or alternatively, they may be covered e.g. by meshes or by perforated members. This does not withstand that the air outlets and air inlets face the surroundings to receive air therefrom or expel air into it, respectively. The at least one air inlet may be positioned and/or oriented so as to capture ram air when the vehicle travels in a forward driving direction. For example, an open face a cross-section of the air inlet may at least partially face in said forward driving direction.

The airflow adjustment device is preferably free of an actively driven air flow generator, such as a fan. Rather, it may be configured to adjustably guide an airflow entering through the air inlet through and/or within the airflow channel arrangement. For example, it may comprise at least one movable control surface and/or at least one movable member that is exposed to said internal airflow in the airflow channel arrangement. Additionally or alternatively, it may comprise at least one actuator, such as an electric motor, in particular to move the above-mentioned control surface and/or movable member. Additionally alternatively, it may comprise or be connected to at least one control unit to adjust the airflow through the air outlets in a desired manner.

Generally, the airflow guiding system may be configured to adjust the airflow passing through each of the air outlets depending on at least one predefined vehicle parameter, said parameter e.g. indicating or being dependent on a driving condition of the vehicle. The parameter may e.g. be a travelling speed of the vehicle, a torque request by the driver or a drive mode selected by the driver. The parameter may be communicated to and/or obtained by a control unit of the airflow adjustment device, e.g. to control an optional actuator or movable surface or movable member of the airflow adjustment device based on said parameter.

The airflow guiding system disclosed herein generally enables to variably generate airflows which stream from a preferably internal air path provided by the air channel arrangement into the surroundings through different air outlets. This way, e.g., depending on a certain driving situation, air outlets that are suitable for generating an airflow of a desired strength and/or in a desired direction may be flexibly selected. Overall, this improves the controllability of the aerodynamic characteristics of the vehicle. Moreover, the airflow guiding system is marked by a compact structure and may, e.g., remove or at least reduce a need for other airflow control surfaces, in particular external ones. Rather, a preferably internal possibility to control a direction of the airflow that streams into the surroundings can be provided by way of the airflow adjustment device.

According to one embodiment, the airflow adjustment device is at least partially accommodated in the air channel arrangement. In particular, at least an optional movable member and/or controllable surface which may both be used to distribute the incoming airflow between the air outlets can be accommodated in the air channel arrangement. This increases compactness. Also, it limits design requirements because the airflow adjustment device is at least in part not visible and/or accessible from the outside. Also, this may help to improve reliability because the airflow adjustment device is exposed to less environmental influences.

According to one embodiment, the airflow adjustment device is configured to variably divide, or in other words variably distribute, an air flow entering through the air inlet between the air outlets. This way, the airflow adjustment device may adjust an air flow through each of the air outlets. By variably dividing the entering airflow, no additional airflow generating units, such as fans, are needed which reduces costs and acoustic noises.

The variable adjusting of the airflow that passes through the air outlets may also include adjusting (i.e. setting) the airflow through any of the air outlets to zero. Specifically, according to one embodiment the airflow adjustment device is configured to, in at least a first operating state, adjust (i.e. set) the air flow through one of the air outlets to substantially zero.

Generally, the variable adjusting of the airflow through the air outlets and in particular the variable dividing of the airflow between the air outlets may include that an airflow passes through only selected ones of the air outlets at a time. In order to achieve the desired variation, the air outlet(s) through which the airflow can pass or to which the entering airflow is distributed may be switched. This may resemble a discrete control of selecting one or more air outlets at a time from which the entering airflow can be guided back into the surroundings.

Additionally or alternatively, the variable adjusting of the airflow through the air outlets and in particular the variable dividing of the airflow between the air outlets may include a variation of the relative extents and/or strengths and/or volumes of the airflows that pass through and/or that are distributed to each of a plurality of the air outlets. For example, the airflow through or distributed to at least one of the air outlets may be stronger than the airflow through or distributed to at least one other of the air outlets. This relative relation of airflows may be varied, preferably in a continuous or step-wise manner. This may include adjusting said relative relation so that some of the air outlets do not receive and/or expel any airflow.

Especially by providing a respectively variable control of the relative relations of the airflows associated with each air outlet, the controllability of the aerodynamic properties of the vehicle is improved

According to one embodiment, the air outlets face in different directions, i.e. each air outlet faces in one direction and these directions are different from one another. These directions may e.g. extend substantially orthogonally or at an angle with an absolute value of at least 45° to one another. As a result, the air flows passing through the air outlets may be directed in said different directions, too. This may be used to just the aerodynamic properties of the vehicle as needed and e.g. depending on a current driving situation. For example, at least one of these directions may be marked by a reduced aerodynamic drag, whereas at least one other of these directions may be marked by a generation of reactive forces which improve the driving characteristics of the vehicle.

For example, the air outlets may be oriented at different angles to a vertical spatial axis and/or to a horizontal spatial axis, i.e. each air outlet is oriented at an angle to a vertical spatial axis and/or horizontal spatial axis and these angles are different from one another.

In one example, one of the air outlets is configured to guide air into the surroundings at an angle with an absolute value of less than 45° to a vertical spatial axis, in particular less than 20°. This way, a substantially vertical air flow from this air outlet into the surroundings may be generated which helps to generate a downforce on the vehicle. This may help to improve traction.

Additionally or alternatively, one of the air outlets may be configured to guide air into the surroundings at an angle with an absolute value of less than 45° to a horizontal spatial axis, in particular less than 20°. This way, a substantially horizontal air flow from this air outlet into the surroundings may be generated which helps to reduce aerodynamic drag.

According to one embodiment, the air outlets are located in a rear half or a rear quarter of the vehicle. This may relate to a dimension of the vehicle along its longitudinal axis and may further concern a forward driving direction. Accordingly, when viewed in the forward driving direction, a front half of the vehicle and in particular of its length may be located ahead of the rear half.

In other words, the air outlets may be located closer to a rear axle of the vehicle than to a front axle of the vehicle.

By positioning the air outlets in a respective rear portion of the vehicle, the desired aerodynamic properties e.g. in terms of generating downforces and/or affecting aerodynamic drag can be adjusted particularly reliably.

According to one embodiment, the at least one air inlet is located in or closer to a front half of the vehicle compared to the air outlets. Additionally or alternatively, the at least one air inlet may be located closer to a front axle of the vehicle than to a rear axle of the vehicle. Such a positioning helps to reliably capture an airflow of sufficient strength by the air inlet.

According to one embodiment, the air outlets each extend along at least half of the width of the vehicle. Additionally or alternatively, the air outlets intersect a middle of the vehicle along a width axis thereof. This helps to ensure that the desired aerodynamic property of the vehicle can be reliably adjusted.

According to one embodiment, the airflow adjustment device comprises at least one flap that is movable so as to at least partially obstruct one of the air outlets. For example, the flap may be rotated. In one example, the flap may be moved and in particular rotated to at least partially obstruct either one of the air outlets. In other words, the flap may switch between the air outlets that it obstructs. For example, in a first operating state, the flap may at least partially obstruct at least a first one air outlets (but preferably not a second one of air outlets) and in another operating state it may at least partially obstruct at least a second one of the air outlets (but preferably not the first one of the air outlets).

According to one embodiment, the airflow adjustment device comprises at least one rotary valve that is rotatable to at least partially obstruct one of the air outlets and/or to provide an air path to at least one of the air outlets. In a generally known manner, a rotary valve may comprise a rotary member having internal fluid paths. Depending on a rotating angle, these fluid paths may fluidically connect an adjacent channel section and an adjacent air outlet or not. By varying the rotating angle, fluid connections through or across the rotary valve to selected ones of the air outlets may thus be provided. As a result, air may stream through the rotary valve and the respectively connected outlet(s) into the surroundings.

According to one embodiment, the air channel arrangement comprises an air channel, in particular a single, yet possibly branched air channel, that fluidically connects the at least one air inlet to each of the air outlets. This air channel may in particular fluidically connect each of a possible plurality of air inlets to each of the air outlets. This allows for a compact design of the airflow adjustment device that may e.g. divert the airflow between and/or guide it towards the air outlets with a single internal movable member or movable control surface.

According to one embodiment, at least two of air inlets are provided and the air channel arrangement comprises a first air channel for fluidically connecting a first one of the air inlets to a first group of one or more of the air outlets and a second air channel for connecting a second one of the air inlets to a second group of one or more of the air outlets. The first and second air channel may be fluidically decoupled. This way, separate fluidic connections may be provided between each air inlet and at least one air outlet. This may provide additional degrees of freedom in designing and/or positioning the air channels and may improve space efficiency.

In this connection, the airflow adjustment device may be configured to at least partially obstruct one of the air inlets. This means that the airflow entering via this inlet is reduced or even shut off. The airflow from the air outlet that is fluidically connected to said air inlet is reduced or shut off as well. By varying the relative degree to which the air inlets are obstructed, the extent and/or strengths of the airflows from the respectively connected air outlets may thus be varied as well.

For example, the airflow adjustment device may be configured to at least partially obstruct both of the air inlets, wherein the degree of obstruction may be individually set for each air inlet and/or may be set to be different between the air inlets. For doing so, the airflow adjustment device may e.g. comprise an individually operable movable member and/or a movable control surface and and/or an actuator for each of the air inlets according to any of the examples discussed above in connection with an obstruction of the air outlets.

As noted above, according to one embodiment, at least a section of the air channel arrangement extends internally through the vehicle. This section may e.g. be comprised or may be formed by a channel member as previously discussed.

The invention also concerns a vehicle, comprising an airflow guiding system according to any of the previous claims.

Embodiments of the invention are discussed below with respect to the schematic figures. Throughout the figures, same or similar features may be marked with same reference signs. Not all instances of a certain feature shown in a single figure may be marked by a reference sign associated with this feature.

### Brief description of the Figures

Figure 1 depicts a vehicle comprising an airflow guiding system according to an embodiment of the invention, the system being in a first operating state.
Figure 2 depicts the vehicle comprising an airflow guiding system according to an embodiment of the invention, the system being in a second operating state.
Figure 3 depicts an airflow guiding system as e.g. usable in the vehicle of Figures 1 and 2 according to an embodiment of the invention.
Figure 4 shows a first operating state of the airflow guiding system of Figure 3.
Figure 5 shows a second operating state of the airflow guiding system of Figure 3.
Figure 6 is a schematic illustration of an airflow adjustment device that is e.g. usable in the airflow guiding system of Figures 3-5, the device being in a first operating state.
Figure 7 is a schematic illustration of the airflow adjustment device of Fig. 6, the device being in a second operating state.
Figure 8 is a schematic illustration of another airflow adjustment device that is e.g. usable in the airflow guiding system of Figures 3-5, the device being in a first operating state.
Figure 9 is a schematic illustration the airflow adjustment device of Fig. 8, the device being in a second operating state.

### Detailed Description

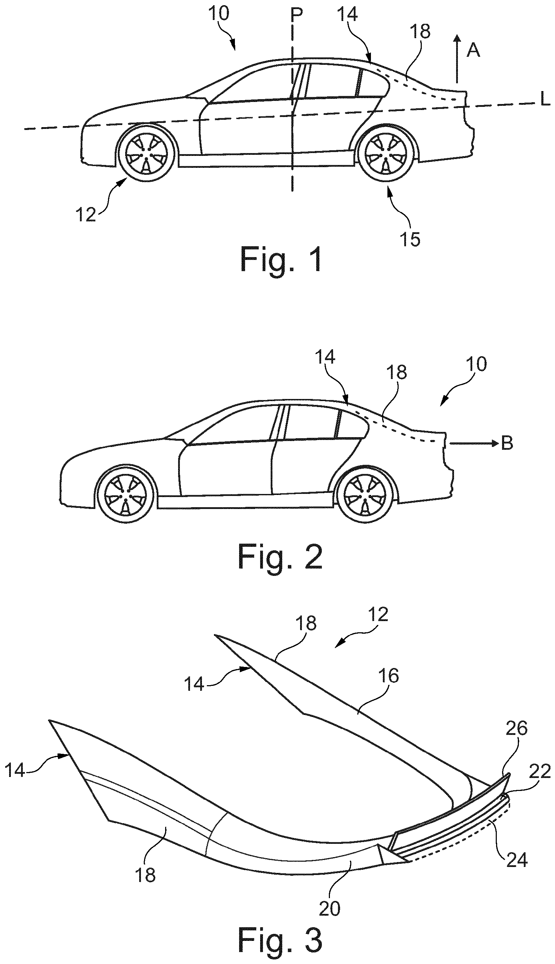

Figure 1 shows a vehicle 10 that comprises a non-illustrated airflow guiding system according to an embodiment of the invention. The vehicle 10 has a longitudinal axis Lalong which a length dimension of the vehicle 10 extends. A central plane P is marked which extends orthogonally to the longitudinal axis and is positioned at half the length of the vehicle 10. A front half of the vehicle 10 comprises a front axle 12. A rear half of the vehicle 10 comprises a rear axle 15.

As discussed in further detail with respect to the following figures, the non-illustrated airflow guiding system has a plurality of air outlets provided in the rear half of the vehicle 10 and in particular at a rear end thereof. Also, this airflow system has at least one air inlet, this air inlet being positioned in or closer to the front half of the vehicle 10 than the air outlets.

By means of the airflow guiding system, airflows in at least two directions may be generated. Specifically, these airflows may be generated from air entering through the air inlet and being guided back into the surroundings by the air outlets.

Figure 1 depicts a first airflow marked by an arrow A and extending substantially vertically. Figure 2 depicts a second airflow marked by an arrow B and extending substantially horizontally. These airflows may be generated alternatively and/or simultaneously. In the latter case, a relative strength of the airflows can be adjusted, so that one is stronger than the other.

The substantially vertical airflow of Figure 1 generates a downforce onto the rear end of the vehicle 10. This forces the rear axle 15 stronger towards the ground, so that traction is increased. This may be desired in particular when travelling at low speeds or in wet or slippery conditions. The substantially horizontal airflow of Figure 2, on the other hand, helps to reduce aerodynamic drag. This may in particular be desired when travelling at high speeds.

Figure 3 shows part of an exemplary airflow guiding system 12 that can e.g. be used in the vehicle 10 of Figures 1 and 2. By way of example, the airflow guiding system 12 comprises two air inlets 14 whose opened faces are not visible in figure 3.

Figures 1 and 2 indicate a possible position of one of the air inlets 14. Specifically, this air inlet 14 is positioned close to a rear side window and/or in the area of a C-pillar of the vehicle 10. It is to be understood that at the respective other side of the vehicle 10 that faces away from the viewer in Figures 1 & 2, the other air inlet 14 may be provided at a similar position. The air inlets 14 and specifically their opened faces are oriented so as to receive ram air when travelling forward.

Referring back to Figure 3, the airflow guiding system 12 comprises an air channel arrangement 16. This air channel arrangement 16 has two channel sections 18 that are each fluidically connected to a chamber 20 or, put differently, to a plenum. Each channel section 18 extends internally within the vehicle 10 from one of the air inlets 14 to the chamber 20. A possible extension of a part of one of the channel sections 18 is schematically indicated in Figures 1 and 2 by a dotted line. While the channel sections 18 extend substantially along the longitudinal axis L, the chamber 20 extends substantially transverse thereto and along a width dimension of the vehicle 10. In particular, it spans from one side of the rear end of the vehicle 10 to the other.

In the shown example, the channel sections 18 and the chamber 20 are comprised by a common channel member that fluidically connects all air inlets 14 with all below-discussed air outlets 22, 24. This common channel member may be a single piece member or a multi-piece assembly. It may be a hollow member whose interior provides a space through which the air can flow. The air channel arrangement 16 is at least partially and preferably mostly or fully accommodated within the vehicle 10, so as to provide an internal air path within and through the vehicle 10.

The airflow guiding system 12 further comprises a plurality of air outlets 22, 24. These are schematically marked by dotted lines in Figure 3. Both air outlets 22, 24 are provided at a rear side of the chamber 20 and form apertures in said chamber 20.

A first air outlet 22 faces substantially upwards, whereas a second air outlet 24 faces rearward. Both air outlets 22, 24 are formed as elongated slots and extend along a width of the chamber 20 and e.g. cross a center of the vehicle 10 in a width direction.

In the depicted embodiment, the airflow guiding system 12 also comprises an optional spoiler 26. This spoiler 26 can be a static or a movable member. It generally serves to shield an airflow that streams out of the first air outlet 22 from surrounding airflows.

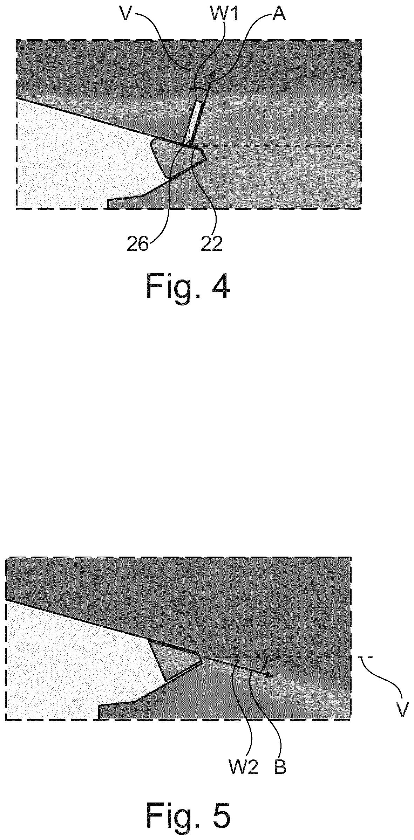

Figure 4 illustrates an airflow marked by an arrow A out of the first air outlet 22. It is shown that this airflow extends at an angle W1 to a vertical spatial axis V. This angle W1 may be less than 45° and in particular less than 25°, so as to generate significant downforces.

Figure 5 illustrates an airflow marked by an arrow B out of the second air outlet 24 and with the optional spoiler 26 being retracted or generally omitted. It is shown that this airflow extends at an angle W2 to a horizontal spatial axis H. This angle W2 may have an absolute value of less than 45° and in particular less than 25°, so as to limit aerodynamic drag.

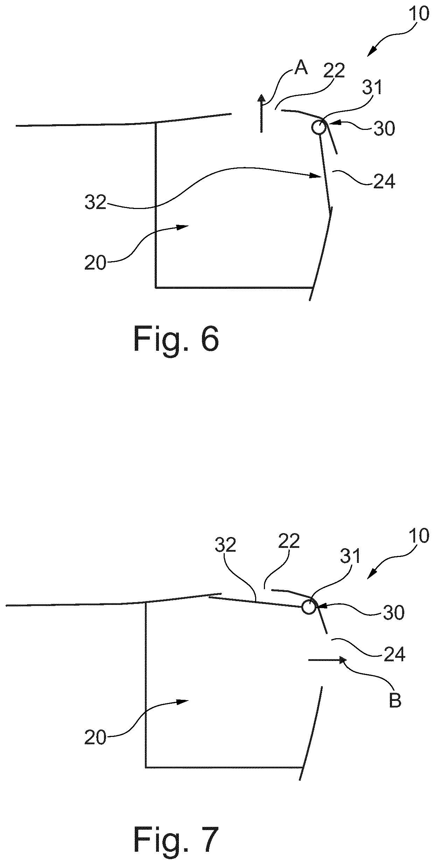

Figure 6 is a schematic illustration of part of the airflow guiding system 12 of Figure 3. Specifically, a sectional view of the chamber 20 is shown, with a sectional plane comprising the longitudinal axis L of the vehicle 10 (see Figure 1). In this sectional view, part of an airflow adjustment device 30 is visible. Specifically, a movable member in form of a flap 32 is shown that rotates about a rotational joint 31. A non-illustrated rotational axis of the rotational joint 31 extends orthogonally to the image plane. The airflow adjustment device 30 also comprises a non-illustrated actuator, in particular an electric motor, to rotate the flap 32 about the rotational joint 31. Further, the airflow adjustment device 30 also comprises non-illustrated control unit to rotate the flap 32 e.g. depending on operating parameters of the vehicle 10.

Figure 6 shows a first operating state of the airflow adjustment device 30 in which the flap 32 fully obstructs the second air outlet 24. As a result, air entering the air channel arrangement 16 via the air inlets 14 can only return into the surroundings via the first air outlet 22. This is indicated by a vertical arrow A.

Figure 7 is a view similar to Figure 6 and shows a second operating state of the airflow adjustment device 30. In this state, the flap 32 fully obstructs the first air outlet 22. As a result, air entering the air channel arrangement 16 via the air inlets 14 can only return into the surroundings via the second air outlet 24. This is indicated by a horizontal arrow A.

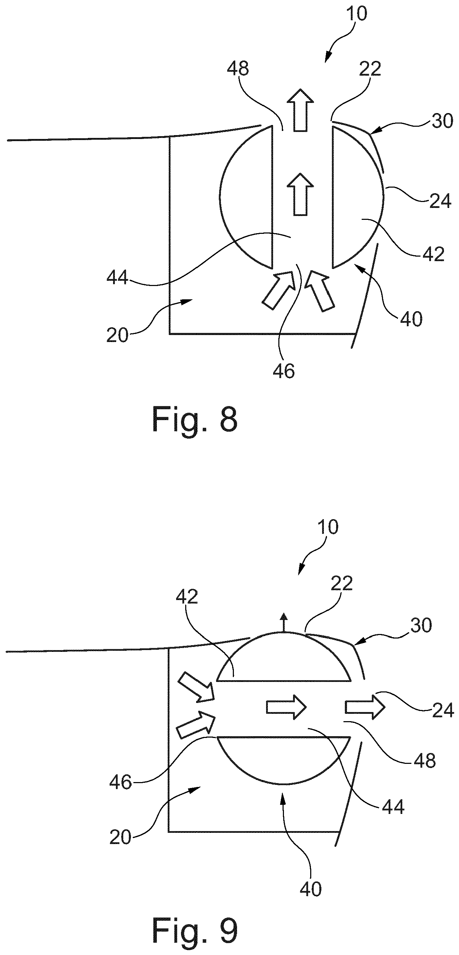

Figures 8 and 9 are views similar to Figures 6 and 7 and depict an airflow adjustment device 30 according to a further embodiment. In this case, a rotary valve 40 instead of the flap 32 is used for directing the airflow in a desired manner.

The rotary valve 40 comprises a valve body 42 through which a duct 44 extends. The duct 44 has an inlet 46 for receiving air from inside the chamber 20 and an outlet 48 for releasing air into the surroundings. The duct 44 guides the air between the inlet 46 and outlet 48. The rotary valve 40 is rotatable about a non-illustrated rotation axis that extends orthogonally to the image plane.

In Fig. 8, the rotary valve 40 is oriented so that its outlet 48 faces and is fluidically connected to the first air outlet 22. As indicated by arrows, air is thus guided into the surroundings in a substantially vertical manner.

In Fig. 9, the rotary valve 40 is oriented so that its outlet 48 faces and is fluidically connected to the second air outlet 24. As indicated by arrows, air is thus guided into the surroundings in a substantially horizontal manner.

Accordingly, in the shown examples the direction of an airflow exiting the airflow guiding system 10 can be switched between the horizontal and vertical directions indicated by arrows A, B.

As described earlier, the airflow guiding device 30 may also be configured differently and in particular so that airflows along the horizontal and vertical directions may occur simultaneously, but e.g. at a different strength. For doing so, the airflow guiding device 30 may e.g. comprise flaps 32 assigned to only one of the air outlets 22, 24 and being configured to variably obstruct the respectively assigned outlet 22, 24. Such a plurality of flaps 32 can be moved in a coordinated manner to balance the vertical and horizontal airflows according to currently desired aerodynamic property of the vehicle 10.

Further, it is noted that an alternative non-depicted embodiment could be based on a similar embodiment as depicted in figure 3, but without a common chamber 20 to which both of the air outlets 22, 24 fluidly connected. Rather, each of the channel sections 18 may be connected to only one of the air outlets 20, 22. This way, the airflow adjustment device 30 may be configured to selectively and in particular variably obstruct an airflow through each of the channel sections 18. Again, this may be implemented in such a manner so as to either switch between the vertical and horizontal airflows e.g. depicted in figures 6 and 7 and/or to balance these simultaneously generated airflows.

For separately adjusting airflows through the channel sections 18 in this embodiment, the airflow adjustment device 30 may e.g. comprise movable members to at least partially obstruct any of the air inlets 14 and/or air outlets 22, 24. Additionally or alternatively, the airflow adjustment device 30 may be configured to variably obstruct any of the channel sections 18, e.g. by a movable member similar to a flap depicted in Figures 6 and 7.

## Claims

1. An airflow guiding system (12) for a vehicle (10), comprising:
at least one air inlet (14) and at least two air outlets (22, 24), wherein the air inlet (14) and the air outlets (22, 24) each face the surroundings of the vehicle (10);
an air channel arrangement (16) that fluidically connects the at least one air inlet (14) and the air outlets (22, 24); and
an airflow adjustment device (30) that is configured to variably adjust an air flow passing through each of the air outlets (22, 24).

2. An airflow guiding system (12) of claim 1,
wherein the airflow adjustment device (30) is at least partially accommodated in the air channel arrangement (16).

3. An airflow guiding system (12) of claim 1 or 2,
wherein the airflow adjustment device (30) is configured to variably divide an air flow entering through the air inlet (14) between the air outlets (22, 24) to thereby adjust an air flow through each of the air outlets (22, 24).

4. The airflow guiding system (12) of any of the previous claims,
wherein the airflow adjustment device (30) is configured to, in at least a first operating state, set the air flow through one of the air outlets (22, 24) to substantially zero.

5. The airflow guiding system (12) of any of the previous claims,
wherein the air outlets (22, 24) face in different directions.

6. The airflow guiding system (12) of any of the previous claims,
wherein the air outlets (22, 24) are oriented at different angles to a vertical spatial axis (V) and/or to a horizontal spatial axis (H).

7. The airflow guiding system (12) of any of the previous claims,
wherein one of the air outlets (22, 24) is configured to guide air into the surroundings at an angle (W1) with an absolute value of less than 45° to a vertical spatial axis (V); and/or
wherein one of the air outlets (22, 24) is configured to guide air into the surroundings at an angle (W2) with an absolute value of less than 45° to a horizontal spatial axis (H).

8. The airflow guiding system (12) of any of the previous claims,
wherein the air outlets (22, 24) are located in a rear half or a rear quarter of the vehicle (10); and/or
wherein the air inlet (14) is located in or closer to a front half of the vehicle (10) compared to the air outlets (22, 24).

9. The airflow guiding system (12) of any of the previous claims,
wherein the air outlets (22, 24) each extend along at least half of the width of the vehicle (10).

10. The airflow guiding system (12) of any of the previous claims,
wherein the airflow adjustment device (30) comprises:
- at least one flap (32) that is movable to at least partially obstruct one of the air outlets (22, 24);
- a rotary valve that is rotatable to at least partially obstruct one of the air outlets (22, 24).

11. The airflow guiding system (12) of any of the previous claims,
wherein the air channel arrangement (16) comprises an air channel that fluidically connects the at least one air inlet (14) to each of the air outlets (22, 24).

12. The airflow guiding system (12) of any of the previous claims,
wherein at least two of air inlets (14) are provided and the air channel arrangement (16) comprises a first air channel for fluidically connecting a first one of the air inlets (14) to a first group of one or more of the air outlets (22, 24) and a second air channel for connecting a second one of the air inlets (14) to a second group of one or more air of the outlets (22, 24).

13. The airflow guiding system (12) of claim 12,
wherein the airflow adjustment device (30) is configured to at least partially obstruct one of the air inlets (14).

14. The airflow guiding system (12) of claim any of the previous claims,
wherein at least a section of the air channel arrangement (16) extends internally through the vehicle (10).

15. Vehicle (10),
comprising an airflow guiding system (12) according to any of the previous claims.
